# EUROPÄISCHE PATENTSCHRIFT

(11) **EP 2 339 284 B1**
(45) Veröffentlichungstag und Bekanntmachung des Hinweises auf die Patenterteilung: **25.03.2020**
(21) Anmeldenummer: 09016077.1
(22) Anmeldetag: 24.12.2009
(51) Int. Cl.: F28F 13/00, F28F 21/02

(54) **Heizkörperanordnung**
Radiator assembly
Agencement de radiateur

(43) Veröffentlichungstag der Anmeldung: 29.06.2011
(60) Teilanmeldung: 19155592.9
(73) Patentinhaber: Zehnder Group International AG, 5722 Gränichen (CH)
(72) Erfinder: Diethelm, Roland, 8400 Winterthur (CH)
(74) Vertreter: Rausch Wanischeck-Bergmann Brinkmann

(56) Entgegenhaltungen:
- EP-A1- 2 259 001
- DE-A1-102005 044 464
- DE-A1-102008 019 888
- FR-A- 1 317 409
- US-A- 3 765 478

## Beschreibung

Die vorliegende Erfindung betrifft eine Heizkörperanordnung nach dem Oberbegriff des Anspruchs 1. DE 10 2008 19 888 offenbart eine derartige Anordnung.

Heizkörperanordnung im Sinne der vorliegenden Erfindung bezeichnet ein Element zur Beeinflussung der Temperatur in Räumen, worunter sowohl Erwärmung als auch Kühlung verstanden werden soll.

Grundsätzlich sind Heizkörperanordnungen bekannt, die aus einem wie auch immer gebildeten Leitungssystem bestehen, welches von einem Wärmeträgermedium, beispielsweise heißem Wasser, durchflossen wird. Diese Wärmeträgermedium kann von einer zentralen Anlage kommen oder beispielsweise elektrisch geheizt im Umlauf geführt sein. Unterschiedlichste Bauformen sind bekannt und im Einsatz, also Röhrenradiatoren, Säulenradiatoren, Plattenradiatoren und dergleichen.

Üblicherweise sind die Leitungssysteme aus Stahlrohr oder Stahlelementen gebildet und an ein entsprechendes Heizungssystem angeschlossen. Im Industriebau ist es bekannt, beispielsweise Deckenstrahler im Sommer auch zur Kühlung zu verwenden. In diesem Fall wird ein Kühlmedium durch das Leitungssystem geführt. Es ist bekannt, Heizkörper mit oberflächenvergrößernden Lamellen zu versehen. Auch ist es bekannt, Heizkörper so zu bestücken, dass ihre Umströmung verbessert wird. In diesem Zusammenhang ist es beispielsweise auch bekannt, durch die Anordnung von Ventilatoren eine intensivere Umströmung der Heizkörperoberfläche zu erzwingen.

Vorbekannte Heizkörpersysteme eignen sich im Hausbereich in der Regel nicht zur Kühlung. Zum Einen sind die Leitungssysteme der Heizanlagen dafür nicht ausgelegt, zum Anderen aber würde ein kühler Metallkörper allenfalls zur Feuchtigkeitskondensation führen, aber die Umgebung dem Grunde nach nicht sehr abkühlen.

Aus der FR 1317409 A ist ein Wärmetauscherelement bekannt, welches wahlweise in einem Heiz- oder Kühlbetrieb betrieben werden kann. Es besteht aus einem Grundkörper, in welchem ein Rohrregister aufgenommen und ein Ventilator angeordnet ist.

Die US 3,765,478 A zeigt eine Heiz- und Kühleinheit für ein mehrstöckiges Gebäude, welche ein Gehäuse mit vertikal verlaufenden Leitungen aufweist. Das Wärmetauscherelement funktioniert nach dem Prinzip der Wärmestrahlung.

Aus der DE 10 2005 044 464 A1 ist eine Klimaanlage für ein Fahrzeug bekannt, mit einem Gebläse zur Förderung von Frischluft und einem Verdampfer zur Kühlung der Luft.

Ferner ist aus dem Stand der Technik, insbesondere aus der DE 10 2008 019 888 A1 eine Wärmetauscheranlage mit einem Wärmeelement und einem Wärmespreizer bekannt. Der Wärmespreizer weist komprimierte Blähgraphitteilchen auf und steht in einer Wärmeübertagungsbeziehung mit dem Wärmeelement.

Die EP 2 259 001 A1 betrifft Formelemente zur Übertragung von Wärme für Heizung und/oder Kühlung. Diese bestehen aus einem Sandwichaufbau umfassend ein plattenförmiges Element aus einem hochwärmeleitenden Werkstoff geringer Eigenfestigkeit, auf dessen beiden gegenüberliegenden Oberflächen jeweils eine Schicht eines zugfesten Materials fixiert ist.

Ausgehend vom beschriebenen Stand der Technik liegt der vorliegenden Erfindung die **Aufgabe** zugrunde, eine Heizkörperanordnung bereitzustellen, welche mit überschaubarem wirtschaftlichen Aufwand erstellbar ist und modular aufgebaut ist. Darüber hinaus soll der Einsatzbereich vergrößert werden, das heißt die Heizkörperanordnung soll möglichst ökonomisch bei geringem Wärmebedarf ebenso gut einsetzbar sein, wie bei großem Wärmebedarf und sogar bei Raumluftkühlungsaufgaben.

Zur technischen **Lösung** dieser Aufgabe wird eine Heizkörperanordnung mit den Merkmalen des Anspruches 1 vorgeschlagen. Weitere Vorteile und Merkmale ergeben sich aus den Unteransprüchen.

Die erfindungsgemäße Heizkörperanordnung umfasst ein Leitungssystem für ein Wärmeträgermedium. Das Wärmeträgermedium kann warm sein oder bei Kühlungsaufgaben kalt. Da bei vorbekannten Heizregistern die jeweilige Temperatur von den in der Regel aus Stahl bestehenden Leitungen nur an deren Oberfläche bereitgestellt wird, wird erfindungsgemäß ein Verteilkörper eingesetzt. Dieser steht in direktem Kontakt mit Leitungen des Leitungssystems und vergleichmäßigt die Temperaturverteilung. Erfindungsgemäß wird die Heizkörperanordnung zusätzlich ergänzt durch eine Wärmetauschereinheit und einen Ventilator. Die Wärmetauschereinheit steht vorzugsweise mit dem Verteilkörper oder ganz oder teilweise auch mit dem Leitungssystem in Verbindung. Vorzugsweise ist der Wärmetauscherkörper aus Aluminium gebildet und nimmt mit der Zeit die Temperatur des Leitungssystems beziehungsweise des Verteilkörpers an. Der Ventilator wiederum ist derart angeordnet, dass er eine am Wärmetauscher vorbeistreichende Luftströmung erzeugt.

Mit der erfindungsgemäßen Heizkörperanordnung lässt sich eine sehr präzise Reaktion auf den Wärme- und/oder Kühlungsbedarf auf wirtschaftliche Weise realisieren.

Der modulare Aufbau umfasst eine aus Leitungssystem und Verteilkörper bestehende Baugruppe. Gemäß einem vorteilhaften Vorschlag der Erfindung ist das Leitungssystem in Graphitschaum eingepresst. Dies kann beispielsweise durch einen Sandwichaufbau erfolgen, bei welchem das Leitungssystem zwischen zwei Graphitschaum enthaltende Platten eingepresst ist. Der Graphitschaum bewirkt, dass die entstehende Temperatur entlang des Leitungssystems auf die gesamte Fläche im Wesentlichen gleichmäßig verteilt wird.

Ein weiteres modulares Baugruppenelement ist der vorzugsweise aus Aluminium bestehende Lamellenkörper mit wenigstens einem Ventilator. Diese Baugruppe ist dazu geeignet, eine Luftströmung entlang der Lamellen des Aluminiumkörpers zu erzwingen, indem der Ventilator die Luft durch den Wärmetauscherkörper saugt oder bläst.

Gemäß einem vorteilhaften Vorschlag wird der Wärmtauscherkörper an der aus Leitungssystem und Verteilkörper bestehenden Baugruppe unter Zwischenlager eines Bleches positioniert. Ein die Baugruppen aufnehmendes Gehäuse ist so ausgebildet, dass es Öffnungen für die am Wärmetauscherkörper entlanggeführte Luftströmung aufweist. Die Ansaugöffnung ist gemäß einem vorteilhaften Vorschlag mit einem Luftfilter versehen.

Das Gehäuse seinerseits kann Befestigungsschienen für eine einfache und schnelle Befestigung an einer Wand aufweisen oder geeignete Öffnungen.

Gemäß einem weiteren vorteilhaften Vorschlag der Erfindung ist eine elektronische Steuerung vorgesehen. Diese kann die Ventilatoren ein-, mehrstufig oder auch gleitend entsprechend dem Wärme- oder Kühlbedarf des Raumes steuern.

Bei kurzfristig erhöhtem Wärme- oder Kühlbedarf des Raumes, werden die Ventilatoren durch die Regelung auf volle Leistung geschaltet (Boost-Effekt). Für den reduzierten Betrieb (z. B. Nacht oder Wochenende) ist ein abgesenkter Betrieb in Bezug auf die eingestellte Solltemperatur möglich. Ein Stand-by-Modus erlaubt, dass nur bei Unter- oder Überschreiten bestimmter Raumtemperaturen Heiz- oder Kühlleistung abgegeben wird. Auch können die effektiv eingestellten Betriebszeiten für Volllast und reduzierten Betrieb übersteuert werden um z. B. die Volllastzeit zu verlängern (overrunning modus).

Im Betrieb wird das Rohrregister im Graphitverbund von Heizungswasser durchflossen und gibt die Wärme an die Graphitschichten ab. Diese leiten den Wärmestrom gleichmäßig an ein aufgelegtes Blech, welches die Wärme wiederum an ein Lamellenpaket oder dort angeordnete Lamellenpakete weiterleitet. Die Ventilatoren saugen Luft durch die Lamellen und verteilen diese.

Bei geringem Wärmebedarf erfolgt die Wärmeabgabe statisch durch Strahlung und Konvektion des Frontbleches und ebenso statisch durch die Lamellenpakete. Bei hohem Wärmebedarf werden die Ventilatoren zugeschaltet, wodurch sich ein höherer dynamischer konvektiver Leistungsanteil ergibt, während der Strahlungsanteil der Frontwand als statischer Leistungsanteil verbleibt. Das Zuschalten der Ventilatoren erfolgt automatisch durch die Steuerung in Funktion des Wärmebedarfs des Raumes.

Die beschriebene Gerätekonfiguration kann jedoch auch zum Kühlen der Raumluft verwendet werden. Anstelle von Heizungswasser wird dann Kühlwasser durch das Rohrregister geführt, welches über die Lamellenpakete und die Gehäusefrontwand zuströmende Wärme aus der Raumluft aufnimmt und abführt. Auch im Kühlbetrieb werden die Ventilatoren durch die elektronische Regelung in Funktion des Kühlbedarfs des Raums geregelt.

Mit der Erfindung wird eine neuartige Heizkörperanordnung vorgeschlagen, die sowohl statisch als auch dynamisch entsprechend dem Wärmebedarf des Raumes betrieben werden kann. Der modulare Aufbau ermöglicht eine gute Anpassbarkeit an Gegebenheiten.

Weitere Vorteile und Merkmale der Erfindung ergeben sich aus der Beschreibung der Figuren. Dabei zeigen:
- Fig. 1: eine schematische perspektivische Darstellung eines Gehäuses für eine erfindungsgemäße Vorrichtung;
- Fig. 2: eine schematische perspektivische Explosionsdarstellung eines Ausführungsbeispiels der Erfindung;
- Fig. 3: eine Schnittansicht entlang III-III gemäß Fig. 2;
- Fig. 4: eine perspektivische Darstellung eines Ausführungsbeispiels für einen erfindungsgemäßen zusätzlichen Wärmetauscher und
- Fig. 5: eine Schnittdarstellung entlang der Linie V-V gemäß Fig. 4.

In den Fig. sind gleiche Elemente mit gleichen Bezugszeichen versehen.

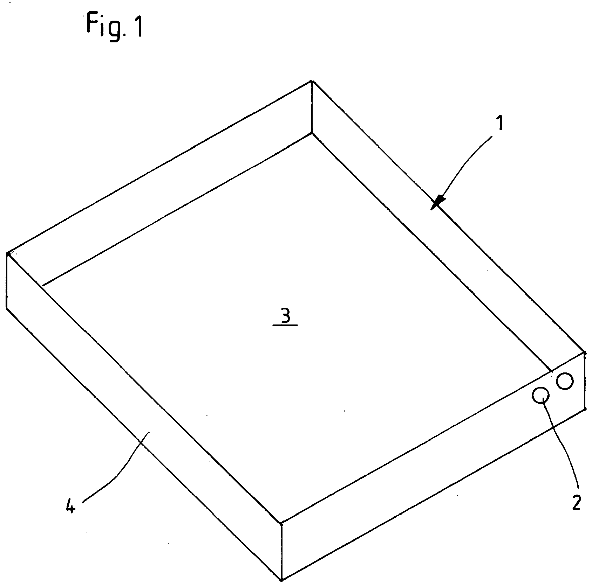

Mit Bezug auf die Fig. 1 bis 3 wird beispielhaft eine Ausführungsform der Erfindung beschrieben.

Ein kassettenartiger Körper 1 mit Durchbrüchen oder Öffnungen 2, die je nach Bedarf für Leitungen für ein Wärmeträgermedium, Elektrizität und dergleichen ausgelegt sind, umfasst im wesentlichen eine Basisplatte 3 und eine umlaufende Umrandung 4, in welcher die Öffnungen und/oder Ausnehmungen 2 angeordnet sind.

Ein Register aus Rohren 5, wobei die Rohre mäanderförmig und/oder parallellaufend angeordnet sein können, ist im gezeigten Ausführungsbeispiel zwischen zwei Platten 6, 8 aus geschäumtem Graphit angeordnet. Das geschäumte Graphit bewirkt eine sehr gute Verteilung der im Rohrbereich auftretenden Temperatur über die Gesamtfläche. Während die Graphitplatten auf der Basisplatte 3 aufliegen, sind sie an der anderen Oberfläche durch ein Blech 7 abgedeckt, so dass sich das Heizmodul (oder Kühlmodul) bestehend aus Gehäuse, Leitungsregister in Verteilerplatten und Abdeckplatte ergibt.

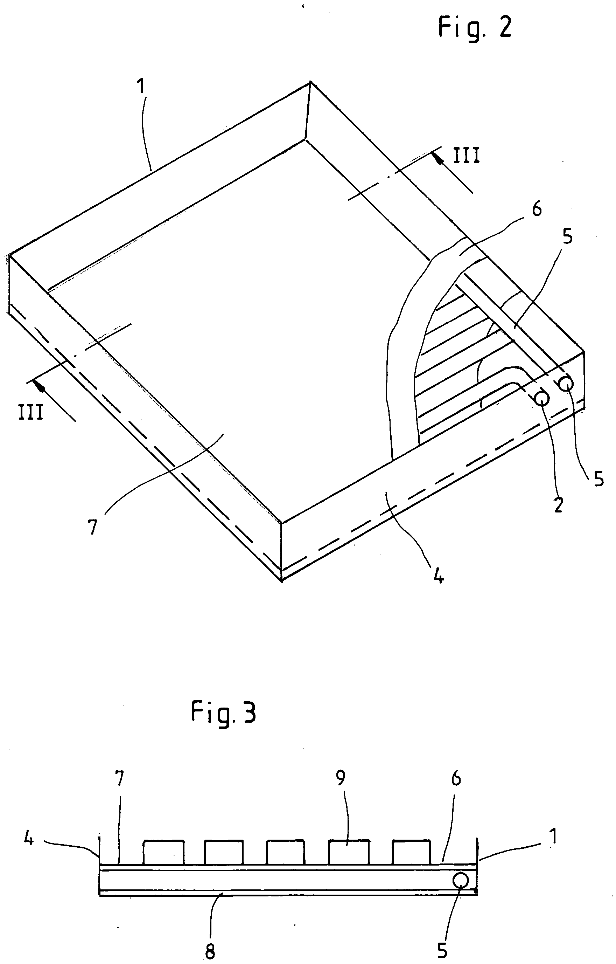

Wie insbesondere in Fig. 3 gezeigt, sind zusätzliche Wärmetauscherelemente 9 auf die Platte 7 aufgesetzt. Eine nicht gezeigte Rückwand kann in diesem Fall das Gehäuse eben verschließend aufgesetzt sein. An der Rückwand und/oder den Seitenwänden können Befestigungs- und/oder Halteschienen angeordnet sein.

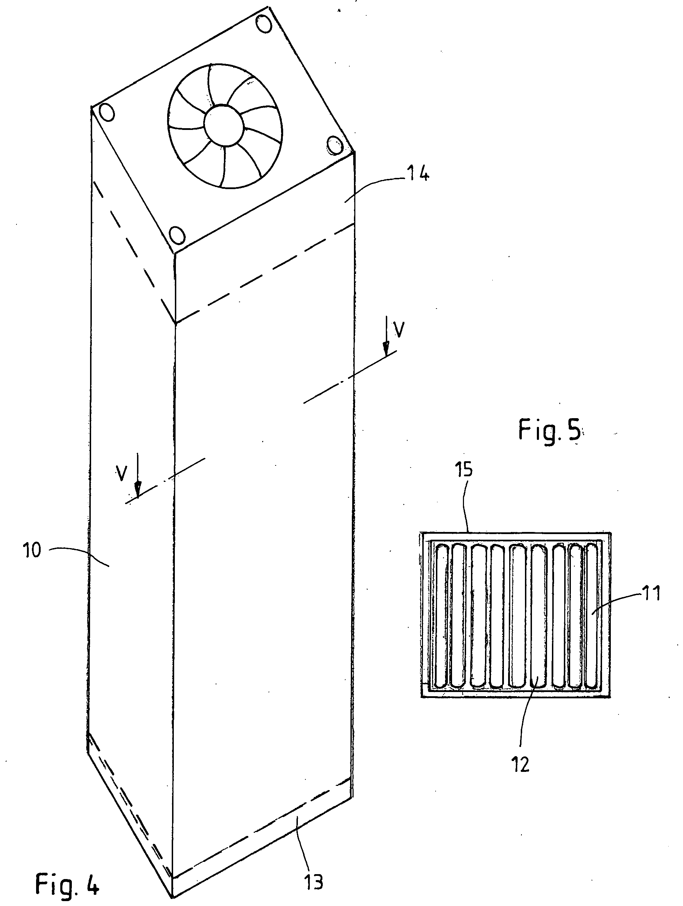

Mit Bezug auf die Fig. 4 und 5 wird ein Ausführungsbeispiel eines erfindungsgemäßen zusätzlichen Wärmetauscherelementes gezeigt. Das Wärmetauscherelement besteht aus einem im wesentlichen rohrförmigen Körper 10, in welchem im gezeigten Ausführungsbeispiel durch die Ausbildung von Rippen oder Lamellen 11 Kanäle 12 ausgebildet sind. Beispielsweise kann dies durch das Zusammenstecken zweier Halbschalen aufgebaut werden. Im Bereich der unteren Öffnung ist ein Luftfilter 13 angeordnet, im Bereich der oberen Öffnung des Körpers 10 ein Ventilator 14. Mittels des Ventilators 14 wird die Luft durch den Luftfilter 13 und durch die Kanäle 12 des Körpers 10 hindurchgesaugt. Eine nicht gezeigte Steuerung und/oder Regelung steuert den Ventilator bedarfsgerecht an.

Im gezeigten Ausführungsbeispiel ist das Wärmetauscherelement 10 mit den Rippen 11 beispielsweise aus Aluminium gebildet. Wird das Element mit der Wärmetauscherfläche 15 an einer Temperaturquelle, beispielsweise dem Blech eines Heizkörpers oder der Oberfläche eine Kühlrippe, angeordnet, nimmt der metallene Körper und nehmen die metallenen Rippen langsam die entsprechende Temperatur an, die sie an die durch den Ventilator zwangsweise hindurchströmende Luft abgeben. Auf diese Weise kann sehr präzise und effektiv eine Erwärmung oder eine Kühlung der Umgebungsluft erfolgen.

Die beschriebenen Ausführungsbeispiele dienen nur der Erläuterung und sind nicht beschränkend.

### Bezugszeichenliste

- 1: Gehäuse
- 2: Öffnungen
- 3: Basisplatte
- 4: Rand
- 5: Rohrregister
- 6: Verteilerplatte
- 7: Blechplatte
- 8: Verteilerplatte
- 9: Wärmetauscherelement
- 10: Wärmetauscherkörper
- 11: Rippe
- 12: Kanal
- 13: Luftfilter
- 14: Ventilator
- 15: Wärmetauscherfläche

## Patentansprüche

1. Heizkörperanordnung zur Wärmeübertragung durch Kombination von Strahlung und Konvektion, umfassend ein Gehäuse, das eine Frontwand zur statischen Wärmeabgabe durch Strahlung aufweist, wenigstens ein Leitungssystem in Form eines Rohrregisters zur Führung eines Heiz-/Kühlmediums, wenigstens einen Verteilkörper, gebildet aus Graphit, zur Vergleichmäßigung der Temperaturverteilung, **dadurch gekennzeichnet, dass das Gehäuse** als kassettenartiger Körper mit Öffnungen ausgebildet ist, mit einer Basisplatte und einer umlaufenden Umrandung, in welcher die Öffnungen angeordnet sind, wobei die Heizkörperanordnung wenigstens eine zusätzliche Wärmetauschereinheit in Form eines Lamellenpaketes sowie wenigstens einen Ventilator umfasst, mittels welchem Ventilator die durch Konvektion erfolgende Wärmeübertragung bedarfsweise anpassbar ist.

2. Heizkörperanordnung nach Anspruch 1, **dadurch gekennzeichnet, dass** das Rohrregister aus zwei Sammelrohren und zwischen diesen verlaufenden Heizrohren gebildet ist.

3. Heizkörperanordnung nach Anspruch 1, **dadurch gekennzeichnet, dass** der Graphit geschäumter Graphit ist.

4. Heizkörperanordnung nach einem der vorhergehenden Ansprüche, **dadurch gekennzeichnet, dass** das Leitungssystem in den Verteilkörper wenigstens teilweise eingepresst ist.

5. Heizkörperanordnung nach einem der vorhergehenden Ansprüche, **dadurch gekennzeichnet, dass** das Wärmetauscherelement oberflächenvergrößernde Rippen aufweist.

6. Heizkörperanordnung nach einem der vorhergehenden Ansprüche, **dadurch gekennzeichnet, dass** das Wärmetauscherelement wenigstens teilweise aus Aluminium gebildet ist.

7. Heizkörperanordnung nach einem der vorhergehenden Ansprüche, **dadurch gekennzeichnet, dass** der Ventilator am Wärmetauscherelement angeordnet ist.

8. Heizkörperanordnung nach Anspruch 7, **dadurch gekennzeichnet, dass** das Gehäuse mit Luftfiltern besetzte Öffnungen aufweist.

9. Heizkörperanordnung nach einem der vorhergehenden Ansprüche, **dadurch gekennzeichnet, dass** diese eine Steuereinheit aufweist.

## Claims

1. A radiator assembly for heat transfer by combining radiation and convection, comprising a housing which comprises a front wall for the static heat dissipation by means of radiation, at least one pipe system in form of a pipe register for making pass a heating/cooling medium, at least one distribution body made of graphite for homogenizing the temperature distribution, **characterized in that** the housing is configured as a cassette-like body having openings and comprising a base plate and a circumferential border in which the openings are arranged, wherein the radiator assembly comprises at least one additional heat exchanger unit in form of a lamella pack as well as at least one ventilator, by means of which ventilator the heat transfer realized by means of convection can be adapted according to the needs.

2. A radiator assembly according to claim 1, **characterized in that** the pipe register is formed by two collector pipes and heating pipes which extend between these ones.

3. A radiator assembly according to claim 1, **characterized in that** the graphite is foamed graphite.

4. A radiator assembly according to one of the preceding claims, **characterized in that** the pipe system is at least partially pressed into the distribution body.

5. A radiator assembly according to one of the preceding claims, **characterized in that** the heat exchanger element comprises surface-enlarging ribs.

6. A radiator assembly according to one of the preceding claims, **characterized in that** the heat exchanger element is at least partially made of aluminium.

7. A radiator assembly according to one of the preceding claims, **characterized in that** the ventilator is arranged on the heat exchanger element.

8. A radiator assembly according to claim 1, **characterized in that** the housing comprises openings provided with air filters.

9. A radiator assembly according to one of the preceding claims, **characterized in that** this one comprises a control unit.

## Revendications

1. Agencement de radiateurs destiné au transfert de chaleur par combinaison de rayonnement et de convection, comprenant un boîtier, qui comprend une paroi frontale pour la dissipation de chaleur statique par moyen de rayonnement, au moins un système de tuyaux sous forme d'un registre de tubes pour faire circuler un moyen de chauffage/un agent réfrigérant, au moins un corps de distribution fabriqué en graphite pour rendre la distribution de température uniforme, **caractérisé en ce que** le boîtier est configuré comme un corps en forme de cassette ayant des ouvertures et comprenant une plaque de base avec une bordure circonférentielle, dans laquelle sont disposées les ouvertures, l'agencement de radiateurs comprenant au moins une unité d'échange de chaleur supplémentaire sous forme d'un paquet de lamelles ainsi qu'au moins un ventilateur, à l'aide duquel ventilateur le transfert de chaleur effectué par moyen de convection peut être adapté en cas de besoin.

2. Agencement de radiateurs selon la revendication 1, **caractérisé en ce que** le registre de tubes est formé par deux collecteurs et par des tubes de chauffage, qui s'étendent entre ceux-ci.

3. Agencement de radiateurs selon la revendication 1, **caractérisé en ce que** le graphite est du graphite moussé.

4. Agencement de radiateurs selon l'une des revendications précédentes, **caractérisé en ce que** le système de tuyaux est au moins partiellement pressé dans le corps de distribution.

5. Agencement de radiateurs selon l'une des revendications précédentes, **caractérisé en ce que** l'élément d'échange de chaleur comprend des nervures augmentant la surface.

6. Agencement de radiateurs selon l'une des revendications précédentes, **caractérisé en ce que** l'élément d'échange de chaleur est au moins partiellement formé en aluminium.

7. Agencement de radiateurs selon l'une des revendications précédentes, **caractérisé en ce que** le ventilateur est disposé sur l'élément d'échange de chaleur.

8. Agencement de radiateurs selon la revendication 7, **caractérisé en ce que** le boîtier comprend des ouvertures munies de filtres à air.

9. Agencement de radiateurs selon l'une des revendications précédentes, **caractérisé en ce que** celui-ci comprend une unité de commande.
